# EUROPEAN PATENT APPLICATION

(11) **EP 2 236 411 A1**
(43) Date of publication of application: **06.10.2010**
(21) Application number: 09400010.6
(22) Date of filing: 30.03.2009
(51) Int. Cl.: B64C 1/14

(54) **Locking device for an aircraft door**

(71) Applicant: Eurocopter Deutschland GmbH, 86609 Donauwörth (DE)
(72) Inventor: Trott, Dirk, 86609 Donauwörth (DE)
(74) Representative: GPI & Associés

(57) **Abstract**

The invention relates to a locking device for a rectangular aircraft door (1) that is coupled to an aircraft fuselage (3) by way of swinging means, to which fuselage (3) in the region of both opposing fuselage frame elements (4a, 4b) In each case at least two guide links (5a, 5b; 5a', 5b'), spaced apart from each other, for keeping the aircraft door (1) closed in a lowered closed position are provided, which guide links (5a, 5b; 5a', 5b') interact with associated guide rollers (7a, 7b; 7a', 7b') that are arranged on the aircraft door (1), wherein the guide track of said guide rollers (7a, 7b; 7a', 7b'), starting from a groove opening (10), first extends in a horizontal track section (11) in the closing direction of the aircraft door (1) and after moving through a subsequent deflection radius (12) extends to a vertical track section (13) until the lowered closed position of the aircraft door (1) at the end of the vertical track section (13) has been reached, wherein the vertical track section (13) after the deflection radius (12) makes a transition to an inwards section (8) that is partly directed in the direction of opening of the aircraft door (1), with an inwards angle (α) exceeding 6° relative to the door area (9) that is subjected to pressure, in order to hold the aircraft door (1) securely closed as a result of the existing interior pressure in the cabin.

## Description

The present invention relates to a locking device for a rectangular aircraft door that is coupled to an aircraft fuselage by way of swinging means, to which fuselage in the region of both opposing fuselage frame elements in each case at least two guide links, spaced apart from each other, for keeping the aircraft door closed in a lowered closed position are provided, which guide links interact with associated guide rollers that are arranged on the aircraft door, wherein the guide track of said guide rollers, starting from a groove opening, first extends In an approximately horizontal track section in the closing direction of the aircraft door and after moving through a subsequent deflection radius section extends in the direction of the door sill to a vertical track section until the lowered closed position of the aircraft door at the end of the vertical track section has been reached.

The field of application of the present invention predominantly relates to commercial aircraft for higher altitudes, with the cabin of said aircraft being pressurised during flight. Since the interior pressure in the cabin acts against the closing force exerted by the locking mechanism, special measures need to be taken to ensure that the aircraft door is and remains safely closed. In the context of the present invention, the term "aircraft door" relates to any essentially rectangular aircraft doors of a commercial aircraft, which aircraft doors are subjected to the interior pressure in the cabin. In this arrangement, aircraft doors of course as a rule comprise rounded corner regions and match the cross section of the aircraft fuselage, in other words they are usually curved.

From DE 199 48 844 A1 a locking device for an aircraft door is known, which locking device is swung outwards for opening, and is swung onto the aircraft fuselage for closing, after which it is brought to a position having positive fit in relation to the aircraft fuselage. In order to carry out the functions of unlocking, opening and swinging out the aircraft door, as well as in order to carry out the opposite functions, program-controllable electric motors are provided. In said arrangement the door operation lever is arranged beside the aircraft door in the region of the aircraft fuselage, and when operated de-arms the securing shaft of a door locking mechanism. In contrast to this, electric motors support mechanical unlocking or locking of the raising- and locking shaft of the door locking mechanism as well as raising or lowering the aircraft door in order to move it behind stops that are used for locking the aircraft door in a position having positive fit due to gravity.

From DE 197 38 402 B2 a further locking device for an aircraft door is known In which said aircraft door is coupled to an aircraft fuselage by way of a supporting arm as a swinging means. On the opposing fuselage frame elements of the essentially rectangular opening in the aircraft fuselage, in each case two guide elements, spaced apart from each other, are affixed as receiving elements for guide rollers on the aircraft door. In this arrangement said guide rollers engage said guide elements having positive fit and for the guide rollers that serve as abutments form a guide link for keeping the aircraft door closed in the lowered closed position. By means of the lift device the aircraft door is guided upwards from the completely closed position along a curved lift-movement track that is defined by the guide link, and in this way is moved out of the interaction having positive fit of the guide rollers affixed to the aircraft door, with the guide link that is affixed on the aircraft fuselage, so that the aircraft door at the end of the opening lift can first be moved from the door opening towards the outside, and subsequently can be moved essentially parallel to the aircraft fuselage surface into the completely open position.

According to the generally known international regulations that apply to aircraft technology, in a commercial aircraft the closing security of an aircraft door is, among other things, determined by the geometry of the guide track of the guide link. Regulations prescribe that the vertical track section of the guide link needs to extend at a certain inwards angle α relative to the door area that is subjected to pressure, which angle must not be less than 3°. As a result of these inwards angles α a small fraction of the force that acts on the door area as a result of the interior pressure in the cabin is deflected to the perpendicular direction so that as a result of this the aircraft door is pushed downwards into the guide link. Apart from increasing the intrinsic weight of the aircraft door, this improves the closing security.

In order to ensure the prescribed closing security, in particular in the case of large aircraft doors, up to now these doors were designed with a heavier intrinsic weight matched to closing security. In interaction with the prescribed inwards angle α, in this way it was possible to prevent unintended manual opening of the aircraft door in flight as a result of activation of the opening lever. Existing regulations require precautionary measures to prevent such unintended or intended opening of a passenger door in flight at pressure differentials of more than 2 psi. To this effect up to now the above-described electric motors or other electric actuators for blocking the door mechanism were used. Overall, this solution appears quite expensive from the point of view of device technology, and, furthermore, the associated heavy weight of the door is principally undesirable in aircraft construction.

It is thus the object of the present invention to create a locking device for an aircraft door, which locking device with simple technical means ensures the required closing security of an aircraft door which at the same time has a reduced intrinsic weight.

This object is met based on a locking device according to the precharacterising part of claim 1 in conjunction with its characterising features. The subsequent dependent claims state advantageous improvements of the invention.

The invention includes the technical teaching according to which the vertical track section of the guide link for an aircraft door after the deflection radius makes a transition to an inwards section that is partly directed in the direction of opening of the aircraft door, with the inwards angle α of the inwards section exceeding 6° relative to the door area that is subjected to pressure, in order to hold the aircraft door securely closed as a result of the existing Interior pressure in the cabin.

In other words, when they are raised, i.e. opened, the aircraft doors are guided by the guide links, wherein the special inwards angle α of the part of the guide track towards the direction of effect of the force resulting from the interior pressure in the cabin is selected In such a way that a considerable force component against the direction of opening arises, as a result of which any opening of the door is prevented.

The solution according to the invention is associated with an advantage in particular in that, in contrast to the state of the art, the uncommonly steep inwards angle α implements a guide link which from geometric proportions generates a closing force which acts against the direction of opening in addition to the weight of the door. As a result of these simple geometric proportions an overall force in the direction of closing arises, which overall force is such that maximum operating forces that could be exerted manually in order to open the door would be insufficient for opening the aircraft door. The solution according to the invention to a large extent uses the interior pressure in the cabin, which pressure is present in the aircraft cabin, to ensure the closing security of the aircraft door. Instead of using the weight of the aircraft door in order to achieve improved closing security, as has otherwise been common, the same result is thus achieved by the geometric measures according to the invention, which also has a beneficial impact on weight savings in aircraft construction.

Investigations have shown that the guide track in the inwards section of the guide link advantageously extends at an inwards angle α ranging between 6° and 40° relative to the door area that is subjected to the interior pressure in the cabin. The larger the selected inwards angle α, the greater the closing forces that are achieved, which on the other hand, however, also have to be overcome by the locking mechanism when the aircraft door is being opened. At any rate, the guide link must not reach the angular region α of self-locking, which would be attained in the region above 45°.

Within the context of the solution according to the invention it is possible for the vertical track section after the deflection radius to first make a transition to a straight intermediate section which is adjoined by the inwards section that is provided to ensure closing security. By way of such a straight intermediate section the lift height of the aircraft door can be Increased without the geometry of the guide track impeding the lifting action, at least in this intermediate section.

A particularly suitable deflection radius between the approximately horizontal track section and the approximately vertical track section is in the range between 80° and 100°. The deflection radius follows the movement direction, predetermined by the locking mechanism, for opening or closing the aircraft door. Preferably a deflection radius of 90° is proposed.

The guide link, which is used to accommodate the guide roller, comprises a constant groove width of preferably 20-40 mm. The groove width depends on the external diameter of the guide roller, which interacts with the guide link so that it fits while maintaining some play. Such fit while maintaining some play on the one hand prevents any jamming of the guide roller within the guide link, and on the other hand is selected so as to be sufficiently tight for the aircraft door to reach the defined closed position, and to maintain said closed position under normal operational conditions of the aircraft.

The length of the inwards section is preferably quite short, with this length ensuring a maximum inwards movement at a point in time at which the projections of the stops on the fuselage door still overlap. For example, if the stop on the fuselage is 30 mm in width and the stop on the door is 20 mm in width, and if both are situated horizontally in the middle in the position "door closed", then a maximum length of the inwards movement of a maximum of 25 mm would be selected. In this way, even if the guide rollers should fail in the position of development of the greatest closing force, the function of the stops, namely to hold the door, can still be ensured.

According to a measure that improves the invention, it is proposed that the guide link be made from a link element comprising metal, which link element is attached to the fuselage frame element. In this arrangement the detachable attachment device can be designed such that adjustment of the guide link relative to the associated guide roller can take place.

Further measures that improve the invention are stated in the dependent claims or are shown below in more detail together with the description of a preferred exemplary embodiment of the invention with reference to the figures. The following are shown:
Fig. 1 a diagrammatic front view of an aircraft door with the aircraft fuselage surrounding said aircraft door;
Fig. 2 a longitudinal section of the aircraft door according to Figure 1, along the section line A-A;
Fig. 3 a longitudinal section of the aircraft door according to Figure 1, along the section line B-B; and
Fig. 4 a diagrammatic view of the guide track of a guide link of the locking device.

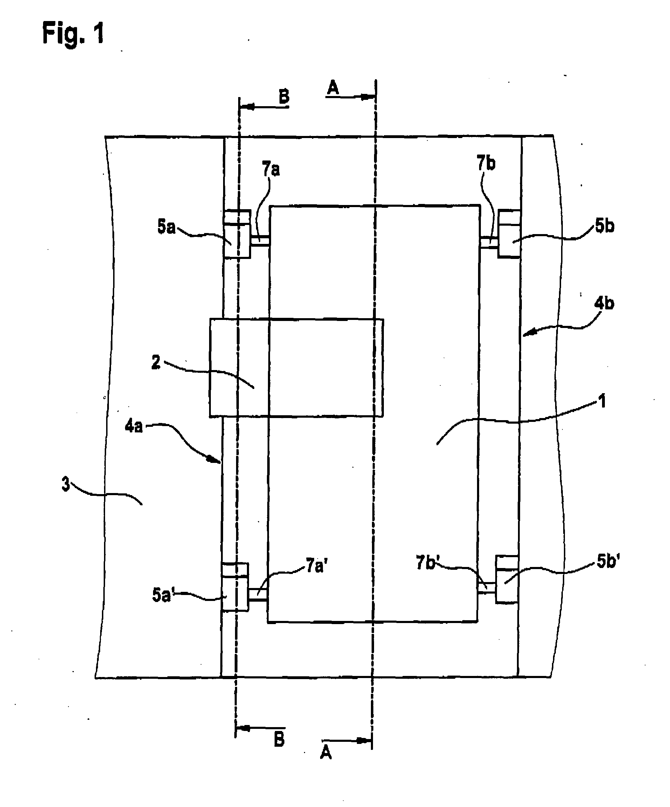

According to Fig. 1 a rectangular aircraft door 1 is coupled to an aircraft fuselage 3 (not shown in detail) by way of swinging means designed in the manner of a supporting frame 2. In the region of both opposing fuselage frame elements 4a and 4b, in each case two guide links 5a, 5b or 5a' and 5b', arranged so as to be spaced apart from each other, are provided. These guide links 5a, 5b, 5a' and 5b' together serve to keep the aircraft door 1 closed in a lowered closed position in which the aircraft door 1 will also move behind stops (not shown in detail in the drawing) In order to lock said aircraft door 1 having positive fit to the fuselage structure 3. The guide links 5a, 5b and 5a' and 5b' which are made in the respective link elements 6 (for example) of metal, are detachably attached to the fuselage frame elements 4a, 4b and interact with associated guide rollers 7a, 7b and 7a', 7b' so that they fit while maintaining some play.

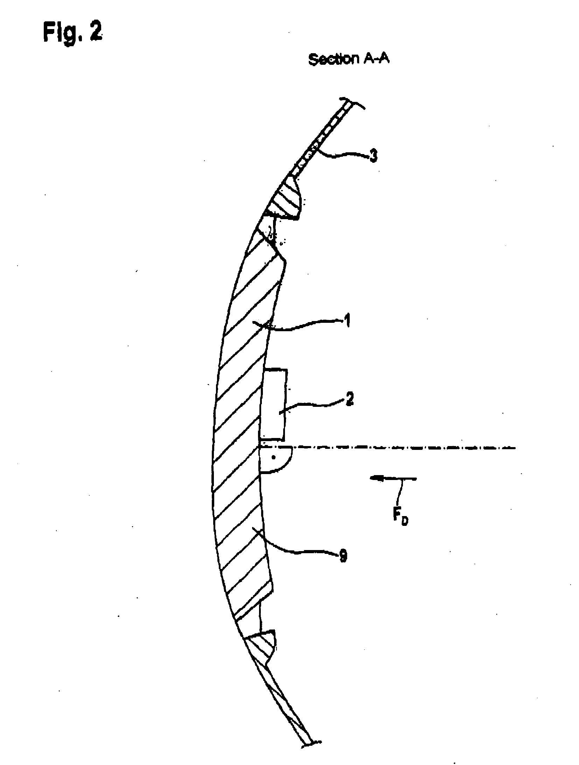

According to Fig. 2 a pressure force FD, which is generated by the interior pressure in the cabin during flight, acts vertically onto the inner door area 9 of the aircraft door 1.

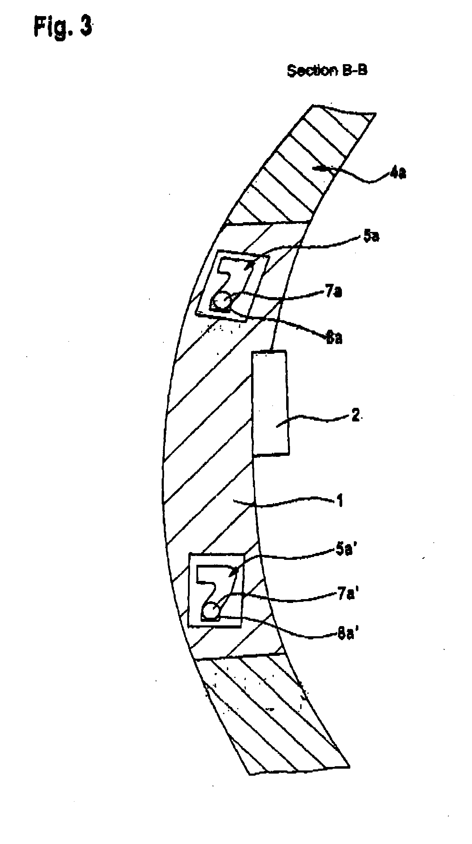

According to Fig. 3, in this arrangement each guide roller 7a, 7a' is located in the region of an inwards section 8a or 8a' of the associated guide link 5a or 5a'.

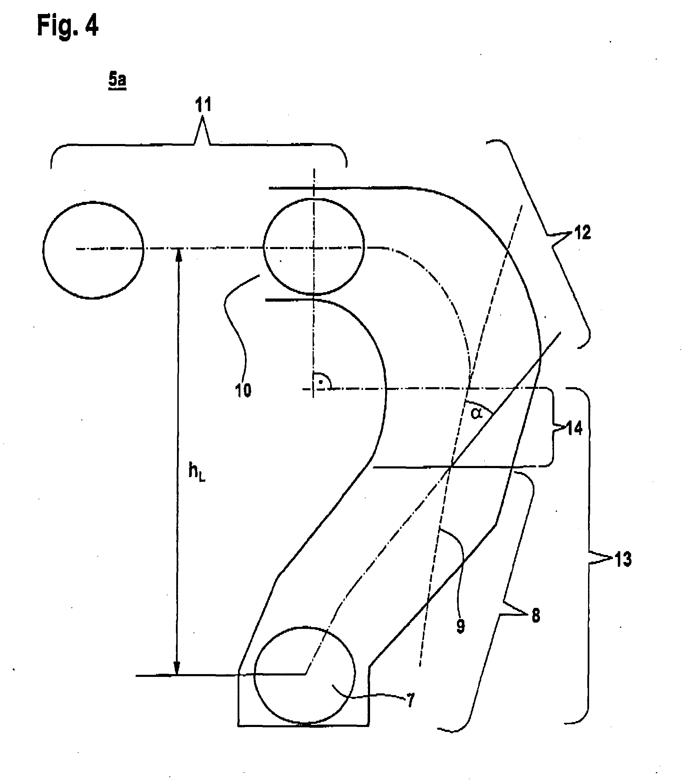

The guide track, illustrated in Fig. 4, of an exemplary guide link 5a starts from a groove opening 10 and first extends along a horizontal track section 11 in the direction of closing the aircraft door 1. The horizontal track section 11 is followed by a deflection radius 12 that directed downwards opens into a vertical track section 13. The guide roller 7 marks the lowered closed position of the aircraft door 1 (not shown in detail in the illustration) at the end of the vertical track section 13. After the deflection radius 12, the vertical track section 13, having passed a short straight intermediate section 14, makes a transition to the inwards section 8 that is partly directed in the direction of opening of the aircraft door 1. The angle generated between the track course of the inwards section 8 and the door area that is subjected to pressure by the interior pressure in the cabin is 6° in the diagram shown, and as a result of the effect of the pressure force FD improves the closing security of the aircraft door 1.

The path that results in vertical direction from the deflection radius 12 and the vertical track section 13, which track section 13 comprises the intermediate section 14 and the insert section 8, corresponds to the maximum lift height hL of the aircraft door 1. The guide roller 7 has to overcome this path in order to as a result of horizontal swinging out finally move out of the groove opening 10 into the open position.

### LIST OF REFERENCE CHARACTERS

- 1: Aircraft door
- 2: Swinging arm
- 3: Aircraft fuselage
- 4: Fuselage frame element
- 5: Guide link
- 6: Link element
- 7: Guide roller
- 8: Inwards section
- 9: Door area
- 10: Groove opening
- 11: Horizontal track section
- 12: Deflection radius
- 13: Vertical track section
- 14: Intermediate section
- 15:
- FD: Pressure force
- hL: Lift height

## Claims

1. A locking device for a rectangular aircraft door (1) that is coupled to an aircraft fuselage (3) by way of swinging means, to which fuselage (3) in the region of both opposing fuselage frame elements (4a, 4b) in each case at least two guide links (5a, 5b; 5a', 5b'), spaced apart from each other, for keeping the aircraft door (1) closed in a lowered closed position are provided, which guide links (5a, 5b; 5a', 5b') interact with associated guide rollers (7a, 7b; 7a', 7b') that are arranged on the aircraft door (1), wherein the guide track of said guide rollers (7a, 7b; 7a', 7b'), starting from a groove opening (10), first extends in a horizontal track section (11) in the closing direction of the aircraft door (1) and after moving through a subsequent deflection radius (12) extends to a vertical track section (13) until the lowered closed position of the aircraft door (1) at the end of the vertical track section (13) has been reached, **characterised in that** the vertical track section (13) after the deflection radius (12) makes a transition to an inwards section (8) that is partly directed in the direction of opening of the aircraft door (1), with an inwards angle (α) exceeding 6° relative to the door area (9) that is subjected to pressure, in order to hold the aircraft door (1) securely closed as a result of the existing interior pressure in the cabin.

2. The locking device according to claim 1,
**characterised in that** the guide track in the inwards section (8) extends at an inwards angle (α) ranging between 6° and 40° relative to the door area (9) that is subjected to the interior pressure in the cabin.

3. The locking device according to claim 1,
**characterised in that** the vertical track section (13) after the defection radius (12) makes a transition to a straight intermediate section (14) which is adjoined by the inwards section (8) that is provided to ensure closing security.

4. The locking device according to claim 1,
**characterised in that** the deflection radius (12) comprises an angle of between 80° and 100°, preferably of 90°.

5. The locking device according to claim 1,
**characterised in that** the guide link (5a, 5b; 5a', 5b') comprises a constant groove width of 20 to 40 mm in which the associated guide roller (7) travels so that it fits while maintaining some play.

6. The locking device according to claim 1,
**characterised in that** the inwards section (8) makes possible maximum lowering of the aircraft door (1) from the position at which the projections of the stops on the fuselage door overlap.

7. The locking device according to claim 1,
**characterised in that** the guide link (5a, 5b: 5a', 5b') is provided for a maximum lift height (hc) of the aircraft door (1) of 40 to 80 mm.

8. The locking device according to claim 1,
**characterised in that** the guide link (5a, 5b; 5a', 5b') is made in a link element (6) comprising metal, which link element (6) is designed to be detachably attached to the fuselage frame element (4a, 4b).

9. The locking device according to any one of the preceding claims,
**characterised in that** the swinging means for moving the aircraft door (1) comprise a supporting arm (2) that is attached to the aircraft door (1) on the one hand, and to the aircraft fuselage (3) on the other hand, so as to be able to swing.

10. An aircraft comprising a locking device for an aircraft door (1) according to any one of the preceding claims.
